# EUROPÄISCHE PATENTSCHRIFT

(11) **EP 1 212 715 B1**
(45) Veröffentlichungstag und Bekanntmachung des Hinweises auf die Patenterteilung: **11.07.2007**
(21) Anmeldenummer: 00949154.9
(22) Anmeldetag: 29.06.2000
(51) Int. Cl.: G06Q 10/00

(54) **EDV-SYSTEM ZUR UNTERNEHMENSFÜHRUNG**
ELECTRONIC DATA PROCESSING SYSTEM FOR OPERATIONS MANAGEMENT
SYSTEME DE TRAITEMENT ELECTRONIQUE DE DONNEES POUR LA GESTION D'ENTREPRISES

(30) Priorität: 04.09.1999 DE 29915584 U
(43) Veröffentlichungstag der Anmeldung: 12.06.2002
(73) Patentinhaber: CSB-System AG, 52511 Geilenkirchen (DE)
(72) Erfinder: SCHIMITZEK, Peter, D-52511 Geilenkirchen (DE)
(74) Vertreter: Haussingen, Peter
(86) Internationale Anmeldenummer: PCT/DE2000/002192
(87) Internationale Veröffentlichungsnummer: WO 2001/022303

(56) Entgegenhaltungen:
- EP-A- 0 837 410
- US-A- 5 125 091
- KAPPELHOFF R: "Integration of ERP to the final control elements" ISA TRANSACTIONS, INSTRUMENT SOCIETY OF AMERICA. PITTSBURGH, US, Bd. 36, Nr. 4, 1997, Seiten 229-238, XP004118375 ISSN: 0019-0578
- DAVID HARE: "Succeeding with ERP" MANUFACTURING ENGINEER, April 1999 (1999-04), Seiten 65--67, XP002177153
- FOX ET AL: "The Integrated Supply Chain Management System" INTERNET CITATION, XX, XX, 7. Dezember 1993 (1993-12-07), Seiten 1-11, XP002090173
- TJOA ET AL: "Impacts of Enterprise Wide Supply-Chain Management Techniques on Process Control" PROCEEDINGS OF THE 1999 IEEE INTERNATIONAL CONFERENCE ON CONTROL APPLICATIONS, 22. - 27. August 1999, Seiten 605-608, XP002177154 Kohala Coast, Hawaii, USA
- TATSIOPOULOS I P ET AL: "A reference data model for production control in the electronics industry" COMPUTERS IN INDUSTRY, ELSEVIER SCIENCE PUBLISHERS. AMSTERDAM, NL, Bd. 34, Nr. 2, 1. November 1997 (1997-11-01), Seiten 221-231, XP004100323 ISSN: 0166-3615

## Beschreibung

Die Erfindung betrifft ein EDV-System zur Unternehmensführung, welches zur Integration von betriebswirtschaftlichen heterogenen Kennwerterfassungseinheiten von für die Gütererstellung und -bewirtschaftung benötigten Kenngrößen und zur Steuerung der Gütererstellung bzw. Güterbewirtschaftung in allen Einzelwirtschaften und Wirtschaftseinheiten einsetzbar ist.

Es ist allgemein bekannt, daß EDV-Systeme zur Unternehmensführung, zur Information des Managements, zur Analyse bzw. in Form eines Expertensystems verwendet werden.

Bekannt ist eine Lösung nach Druckschrift EP 0 209 907 A2, nach der die verschiedenen Management- und Verwaltungsfunktionen in einem großen Betrieb von verschiedenen, bereits vorhandenen Einzelsystemen durchgeführt werden. Dabei ist jedes Einzelsystem - historisch bedingt - autonom konfiguriert, mit eigenen Formaten, Parametern, Definitionen, Eingaben usw. Schnittstellen zwischen den Systemen sind kaum vorhanden, so daß die einzelnen Systeme nicht ohne weiteres miteinander kommunizieren können, es sei denn über eine Bedienungsperson oder spezielle Anpassungsprogramme. Mit der Lösung sollen die verschiedenen und unabhängig voreinander durchgeführten Management- und Verwaltungsarten miteinander verbunden und die Eingabe der Daten, das Speichern und die weitere Verarbeitung der Eingabedaten verbessert werden. Der Nachteil dieser Lösung besteht darin, daß keine Abbildung des Produktionsprozesses oder Teilen davon vorgenommen wird. Eine Beeinflussung und Kontrolle des Produktionsprozesses erfolgt ausschließlich durch verbale bzw. numerische manuelle Eingabe. Die Kommunikation erfolgt offline bei Bedarf (Zwischenspeicherung) zum späteren Abrufen und nicht in real-time. Es erfolgt keine zentrale Steuerung durch das Management sondern ein dezentraler Informationsaustausch (ähnlich Mail-System). Eine Abbildung des Gütererstellungsprozesses bzw. Güterbewirtschaftungsprozesses als Ganzes, die bis zur Kontrolle oder Beeinflussung hinreicht, ist nicht gegeben. Die bisher im Stand der Technik vorhandenen Ergebnisse finden keine Rückwirkungen auf den Regelkreis des Wirtschaftens.

Die Druckschrift US 5251294 beschreibt eine Art Informationssystem, das auf Basis eines Rechners auf verschiedene adressierbare und bezeichnete Inhalte einer Datenbank zugreift. Ähnlich wie in einem Expertensystem sind die Datenbestände inhaltlich geordnet. Bei einem Expertensystem unterliegt jedoch der gesamte Datenbestand einer Vielzahl Regeln, was sich ungünstig auf die Suchzeit auswirkt. Das ausgewiesene erfinderische Merkmal ist die Einbeziehung der Idee des Nutzers, auf das zu untersuchende Suchfeld. Es wird dabei nur jeweils die Teilmenge an hierarchisch geordneten Inhalten verwaltet, die bereits durch die bisher ausgewählte übergeordnete Hierarchieebene bzw. aus Kombinationen mit anderen Teilmengen gebildet wird. Da die Informationen bereits identifiziert' sind, ist stets ein sofortiger Zugriff auf den Inhalt der selektierten Menge möglich. Dadurch ist der angezeigte vorhergesagte Inhalt durch den Lösungsweg des Nutzers (der Chronologie der Selektion) bestimmt. Diese Chronologie des Lösungswegs wird in Form von Verknüpfungsbäumen dargestellt. Als Anwendungsfeld werden komplexe und weitgehend unstrukturierte Probleme angegeben und der Wirtschaftsprozess beispielhaft aufgeführt. Bei dieser Lösung wird keine Abbildung des Produktionsprozesses, sondern eine selektive Auswahl aus einen großen Wissensbestand einer indizierten Datenbank vorgenommen. Eine Abbildung des Gütererstellungs- bzw. Güterbewirtschaftungsprozesses als Ganzes, die bis zur Kontrolle oder Beeinflussung hinreicht, ist nicht gegeben. Die vorhandenen Ergebnisse finden keine Rückwirkungen auf den Regelkreis des Wirtschaftens.

Die Druckschrift DE 4431131 beschreibt ein "technischorganisatorisches Systemwerkzeug". Es besteht aus einem Regelwerk mit Daten bzw. Informationen für vernetzte Einheiten, insbesondere Wirtschaftsorganisationen. Über die Ausbildung eines Regelkreises mit diesem "Systemwerkzeug" werden sich die Teilnehmer an dieser Wirtschaftsorganisation im Wege der Selbstorganisation selbst unterstützen. Das Ziel ist die Steuerung eines komplexen Produktionsprozesses durch die Teilnehmer an diesem Regelwerk. Es liegt eine Realisierung als Computerprogramm verbunden mit einer speziellen Hardware vor. Softwaremäßig werden mit einer Systematik versehene Bausteine mit geeigneter Software erstellt und die Teilprozesse mit Multiplikatoren gewichtet. Die verschiedenen Regelkreise bilden eine vertikale Hierarchie. Die benötigten Daten werden über Betriebsdatenerfassung(BDE)-Systeme erfaßt und die Kommunikation wird in das System integriert. Das Regelwerk arbeitet auf Basis von Verfahren-, Fehler- und Leistungsmessung mit Parametern. Realisiert wird eine Abbildung des ergebnisorientierten Wirtschaftens (Management) in ein prozessorientiertes Wirtschaften im Kreisprozeß, wobei das Kriterium eine Spirale ständiger Verbesserung beinhaltet. Dazu werden prozessorientierte Funktionseinheiten miteinander verknüpft. Die Selbstorganisation wird durch eine selbstanpassende Regelung der Teilprozesse der Wirtschaftsprozesse gebildet. Der Nachteil dieser Lösung ist, daß die diesem wirtschaftlichen Regelkreis zugrunde liegenden Daten nicht redundanzfrei und somit sicher erfaßt und dem EDV-System online und real-time zu Verfügung gestellt werden können.

In der Veröffentlichung von David Hare: "Succeeding with ERP", MANUFACTURING ENGINEER, April 1999 (1999-04), Seiten 65-67, XP002177153 wird die Implementation einer ERP-Software in ein Lagerverwaltungssystem, das mit einem Echtzeit-Prozessüberwachungssystem in Verbindung steht, beschrieben. Diese Kopplung wird zur Automatisierung sowie Flexibilisierung der Produktionsplanung als auch bezüglich Lagerhaltung und Vertrieb, Ausgangsmaterialien, Finanzwesen mit Ertragsrechnung, Verkaufsprognosen, Transportdisposition und Kundenservice eingesetzt.

Ein ähnliches System, das zur besseren Planung und Kontrolle von Aktivitäten mit schneller Reaktion auf Veränderungen, wird von Fox et al in der Druckschrift "The Integrated Supply Chain Management System", Internet Citation, XX, XX, 7.Dezember 1993 (1993-12-07), Seiten 1-11, XP002090173 erwähnt. Zwischen Agenten erfolgt eine Abstimmung und logisches Zusammenwirken, in den drei Ebenen, Strategie, Taktik und Wirkung für die Bereiche Anforderung, Vertrieb, Herstellung und Materialwirtschaft. Es werden somit nur Teilbereiche einer Unternehmenssteuerung abgedeckt, ohne die komplexen Zusammenhänge in einem Wirtschaftsprozess zu berücksichtigen.

Des Weiteren wird von Tjoa et al in der Veröffentlichung "Impacts of Enterprise Wide Supply-Chain Management Techniques on Process. Control", Proceedings of the 1999 IEEE International Conference on Control Applications, 22.-27.August 1999, Seiten -605-608, XP002177154 Kohala Coast, Hawaii, USA die Integration von Enterprise Resource Planning und Supply Chain Management zur Optimierung von Geschäftsprozessen und -entscheidungen durch deren Verknüpfung mit dem Herstellungsprozess beschrieben. Als wesentliche Faktoren für Entscheidungen im Management und für eine flexible Produktion werden hierbei Lieferzeiten, Produktionsmenge, Produktionskosten und Servicequalität betrachtet, wodurch sich wiederum eine begrenzte Anwendbarkeit für bestimmte Teilbereiche der Unternehmenssteuerung ergibt.

Die angeführten Druckschriften behandeln nur bestimmte Teilbereiche im Wirtschaftsprozess eines Unternehmens. Es besteht jedoch nicht die Möglichkeit, den gesamten, allgemeinen Wirtschaftsprozess des Unternehmens per EDV abzubilden und zu steuern, da die benutzten Ausgangsdaten einen Mix aus Details und komplexen Werten darstellen.

Aus der Druckschrift Kappelhoff, R.: "Integration of ERP to the final control elements" in ISA Transactions, Instrument society of America. Pittsburgh, US, Bd. 36, Nr. 4, 1997, Seiten 229-238, XP004118375 ISSN: 0019-0578 ist die Integration eines ERP/MRP-Systems mit einem Echtzeit-Produktionssteuerungssystem, speziell für Produkte, die aus mehreren Komponenten hergestellt werden, bekannt. Das Echtzeit-Produktionssteuerungssystem stellt dabei das ausführende Organ und den Ausgangspunkt der meisten Strategien zur Unternehmenskontrolle dar. In das ERP/MRP-System ist das S88 Modell als Standard für die Prozesskontrolle, der beschreibt, wie die dazu benötigten Daten gespeichert und ausgetauscht werden können, implementiert. Es soll damit unter Anderem erreicht werden, Firmen eine Kontrolle über ihre weltweiten Qualitätsanforderungen und Liefermechanismen zu ermöglichen.
Die beschriebenen Verknüpfungen ermöglichen es, durch wechselseitige Datenübermittlung zwischen Herstellungsprozess, Produktkontrolle und ERP-Software mittels Aufzeichnung von Meldungen einer Produktionseinheit im Vergleich mit einem Idealzustand betriebswirtschaftliche Auswertungen durchzuführen, die zur Verbesserung des Materialeinsatzes und Nutzung der Ressourcen genutzt werden, jedoch keine Steuerung des allgemeinen Wirtschaftsprozesses, wobei das zusätzliche offene Problem besteht, welche Daten in welchem Teil der Verknüpfungen- gespeichert werden sollen.
Grundsätzlich ist diese Integration eines ERP/MRP-Systems mit einem Echtzeit-Produktionssteuerungssystem für einen unternehmensweiten Einsatz geeignet. Dieses integrierte System ist jedoch ebenfalls nicht dazu geeignet, den allgemeinen Wirtschaftsprozess eines Unternehmens abzubilden, diesen zu analysieren und zur Unternehmensführung einzusetzen.

Die Aufgabe der Erfindung ist es, ein EDV-System zur Unternehmensführung zu entwickeln, welches die wirtschaftlichen Fakten, Tatbestände und Abläufe in den Einzelwirtschaften und Wirtschaftseinheiten redundanzfrei mittels eines kleinsten gemeinsamen Vielfachen abbildet, analysiert, bewertet und Reaktionen veranlasst sowie die EDV-technische Anbindung aller zur Produktion von Gütern eingesetzten Aggregate unter Einbindung der Kommunikationstechnik absichert und steuert, wobei die Betriebsdaten über Betriebserfassungsarbeitsplätze direkt online und real-time be- und verarbeitet werden.

Erfindungsgemäß wird die Aufgabe durch die im Patentanspruch 1 angegebenen Merkmale gelöst. Bevorzugte Weiterbildungen der Erfindung ergeben sich aus den Unteransprüchen.

Die Vorteile der Erfindung bestehen darin,
- dass Betriebsdaten über Betriebsdatenerfassungsarbeitsplätze direkt online und real-time be- und verarbeitet werden,
- dass die EDV-technische Anbindung aller zur Produktion eingesetzten Aggregate über Schnittstellen und spezielle Schnittstellen-Programme in das alles umfassende Unternehmens-Informationssystem integriert werden und von diesen die zur Produktion eingesetzten Aggregate gesteuert werden,
   In Figur 4 wird das Prinzip eines EDV-Systems zur Unternehmensführung dargestellt.
   In Figur 5 wird die technische Realisierung eines EDV-Systems zur Unternehmensführung dargestellt.

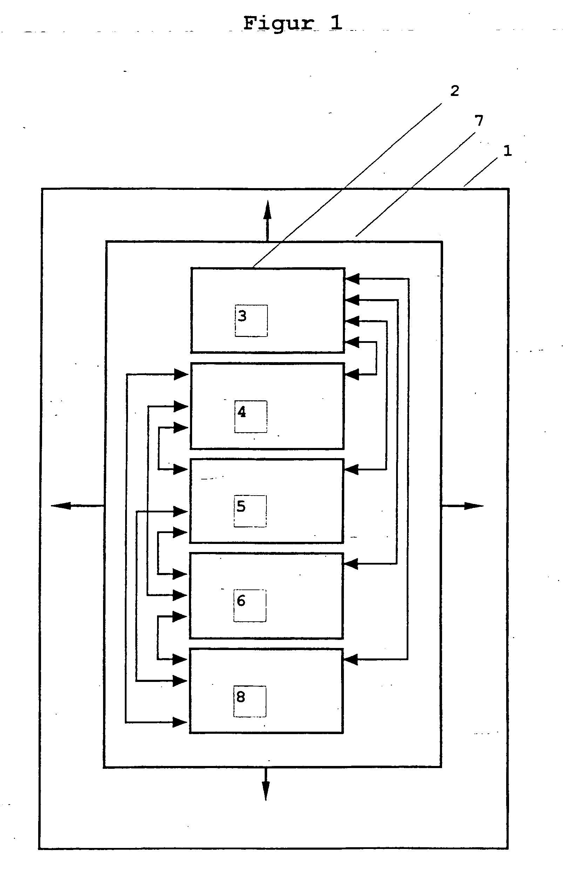

Die Entwicklung eines EDV-Systems zur Unternehmensführung, welches zur Integration von betriebswirtschaftlichen heterogenen Kennwerterfassungseinheiten von für die Gütererstellung benötigten Kenngrößen und zur Steuerung der Gütererstellung dient, basiert auf dem Regelkreis des Wirtschaften, der als Ausgangspunkte den Produktions- und Konsumtionsbereich zum Inhalt hat. Dabei wird die Trennung der Wirtschaftsbereiche in Produktion und Konsumtion über die geregelte funktionsfähige Geldwirtschaft gesehen. Die Produktion (Erstellung von Produkten und Leistungen) wird von den Einzelwirtschaften und Wirtschaftseinheiten (Unternehmen, öffentliche Körperschaften etc.) geleistet. Die Konsumtion (Verbrauch von Produkten und Leistungen) wird den privaten Haushalten zugeordnet. Der Produkt- und Leistungsaustausch zwischen den privaten Haushalten und den übrigen Einzelwirtschaften und Wirtschaftseinheiten vollzieht sich über den Faktor- und Gütermarkt. Die Bewertung der Güter (Produkte und Leistungen) erfolgt (unter der Voraussetzung eines geregelten Geldsystems) aufgrund von Angebot und Nachfrage. Die "integrierte" Faktorkombination stellt das Leistungspotential der Einzelwirtschaften und Wirtschaftseinheiten dar. Die Integrationselemente des Faktors "Integration" ermöglichen die informationstechnische Unterstützung der Faktorkombinationen und der Abbildung aller wirtschaftlichen Prozesse über die Software zur Unternehmensführung. Die wirtschaftlichen Fakten, Tatbestände und Abläufe in den Einzelwirtschaften und Wirtschaftseinheiten werden somit redundanzfrei über die Software mit Hilfe des EDV-Systems abgebildet. Güter und Dienstleistungen werden in bekannter Weise aus_ der zielgerichteten Kombination der Produktionsfaktoren für einen bestehenden Bedarf auf dem Güter- und Faktormarkt in den Unternehmen geschaffen, wobei, wie in Figur 1 dargestellt, das im Unternehmen wirksame Leistungspotential 1 in die Elementarfaktoren 2 des Wirtschaftens, menschliche Arbeitskraft 3, Betriebsmittel 4 (werden von den Einzelwirtschaften und Wirtschaftseinheiten angeboten), Werkstoffe 5 (werden von den Einzelwirtschaften und Wirtschaftseinheiten angeboten), abrufbare, verfügbare Information (6) als eine Art Wissen gegliedert sind. Als Werkstoffe 5 (Halbzeuge, Vorprodukte, Hilfsstoffe) werden alle Güter zusammengefaßt, die als variable Einsatzmittel in die Gütererstellung einfließen. Das Leistungspotential 1 der Einzelwirtschaften wird durch die Kombinationsfähigkeit der Elementarfaktoren -2 (Menschliche Arbeit 3, Betriebsmittel 4, Werkstoffe 5 und abrufbare, verfügbare Information 6) über einen dispositiven Faktor 7 wirksam, der in der jeweiligen Einzelwirtschaft organisiert und erzeugt wird. Die Kombination der Faktoren, als Leistungspotential 1 des Unternehmens, vollzieht sich in den als "Funktionsbereiche" bezeichneten Unternehmenseinheiten. Die Einteilung, der zu diesen Funktionsbereichen zuzuordnenden Funktionen, orientiert sich hierbei an dem vorgegebenen Prozess der Kombinationen der Fakten in den unterschiedlichen Branchen. Eine unverzichtbare Voraussetzung für die erfolgreiche Organisation der internen und externen wirtschaftlichen Abläufe im zielgerichteten Handeln bei der Gütererstellung und zur Absicherung von Dienstleistungen ist die Integration der Funktionsbereiche und Funktionen im Unternehmen. Erst mit der Integration werden die Abläufe im Prozess der Kombination der Faktoren (als wiederholbare Arbeitsgänge) über die "Transmissionswirkung" der Software standardisiert und somit "sicher" wiederholbar. Die notwendige Hardware, die zum Einsatz der Software erforderlich ist, wird dem Elementarfaktor 2, Betriebsmittel 4 zugerechnet. Die Integration der Informationstechnologie über alle Funktionsbereiche sowie Funktionen setzt voraus, daß die Einteilung in Funktionsbereiche der Forderung nach Allgemeingültigkeit entsprechen muß. Hierbei ist zu beachten, daß die einzelnen Unternehmensbranchen sich durch ihre Gewichtung in den Kombinationen der Faktoren unterscheiden und dennoch im gleichen Funktionsbereichsschema abgebildet werden können. Um eine branchenunabhängige und gleichzeitig branchenspezifische Software des Basisintegrationssystems zur Unternehmensführung zu erstellen, folgt für die Abbildung des betrieblichen Leistungsprozesses, daß zu dem Elementarfaktor 2, bestehend aus menschlicher Arbeitskraft 3, Betriebsmittel 4, Werkstoff 5, abrufbare, verfügbare Information 6 sowie dem dispositiven Faktor 7, ein Faktor Integration 8 hinzukommt, welcher zur Erfassung, Identifikation und Ermittlung des Wertverzehrs sowie der Definition des Einsatzes der menschlichen Arbeitskraft 3, der Betriebsmittel 4, der Werkstoffe 5 und der abrufbaren, verfügbaren Information 6 in der Produktion dient. Die Effektivität der Kombination der Faktoren hängt im wesentlichen vom dispositiven Faktor 7 sowie vom erreichten Integrationsgrad der Funktionsbereiche und Funktionen ab.

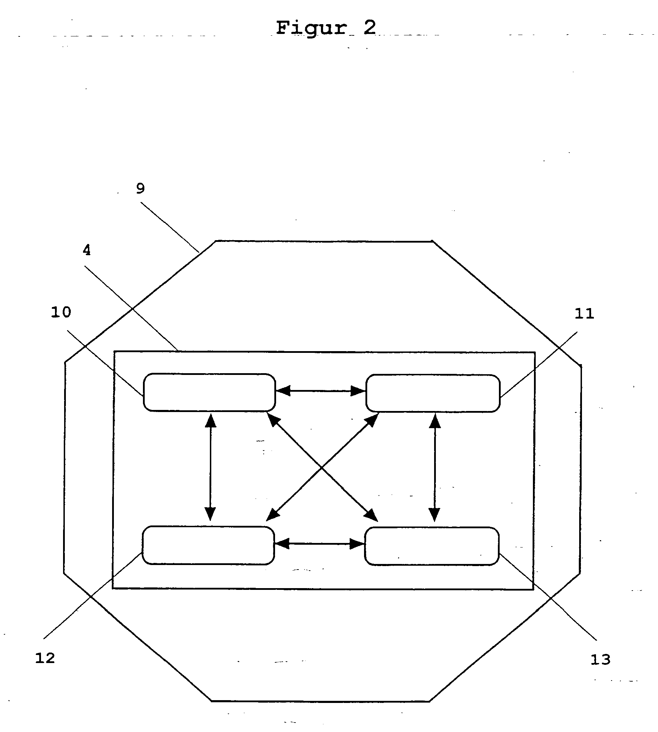

Der in den Funktionsbereichen wirkende Faktor der Integration 8 wird über ein Basis-Element 9 wirksam wie in der Figur 2 dargestellt. Unter dem Basis-Element 9 oder Kräften der Integration sind die kleinsten Einheiten gemeinsamer Daten, Fakten und Abläufe subsumiert aus deren Summe ein "Ganzes" entsteht. Die Gliederung des Basis-Elementes 8 ist orientiert an der Forderung, alle Tatbestände bzw. Abläufe wirtschaftlichen Handelns auf die "kleinsten Bausteine" zurückzuführen, die gleichzeitig auch Subsumierungs-Elemente (in einer Gesamtmenge) sind. Hat man die Struktur der Wirtschaft auf die nicht weiter differenzierbaren Daten und Fakten-zurückgeführt, so läßt sich jede denkbare Kombination im Ablauf aller wirtschaftlichen Vorgänge abbilden sowie wieder zu beliebig gestaltbaren Einheiten technischer und wirtschaftlicher Tatbestände, Abläufe und Organisationsstrukturen zusammenführen. Somit ist sichergestellt, daß diese "kleinsten Elemente" wirtschaftlicher Daten (Fakten, Tatbestände etc.) gleichzeitig Elemente des Faktors Integration 8 sind und das Basis-Element 9 bildet, das mindestens aus zwei der Elemente Adressen 10, Artikel 11, Konditionen 12 und Verfahren 13 besteht; wobei die charakteristischen Merkmale der Adressen 10, der Artikel 11, der Konditionen 12 und der Verfahren 13 untereinander austauschbar eingesetzt werden können. Die zur Steuerung der wirtschaftlichen Abläufe und der Produktionsabläufe eingesetzten geeigneten Informations- und Kommunikationstechniken sind in der Lage, diese komplexen Zusammenhänge abzubilden und zu bearbeiten.

Die charakteristischen Merkmale der Elemente werden als Beispiel wie folgt vorgenommen:
Adresse 10:
   Die eindeutige Kennzeichnung aller Marktteilnehmer erfolgt über die Adresse 10. Unter diesem Begriff der "Identifizierung" aller Personen, juristischer Körperschaften etc. wird in der Informatik die Zuordnung aller Wirtschaftsvorgänge ermöglicht. Der Faktor menschliche Arbeitskraft 3 wird ebenfalls über die Adresse 10 direkt erfaßt. Die Adresse 10 kennzeichnet alle Marktteilnehmer (Lieferant, Kunde etc.), Unternehmensteile, Abteilungen usw. bis hin zum Mitarbeiter. Somit sind alle orts- und namensbezogenen Informationen zentral und redundanzfrei an einer einzigen Stelle für die Informations- und Kommunikationstechnik als Daten, Sprache und Bilder zu bearbeiten, zu speichern und abzurufen.
Artikel 11:
   Die Objekte allen wirtschaftlichen Wirkens sind Güter (Produkte und Leistungen). Diese Güter (auch öffentliche Güter) müssen in der Informatik eindeutig gekennzeichnet werden; dieser Vorgang wird als Artikel-Identifikation bezeichnet. Der Begriff Artikel 11 wird zu Kennzeichnung aller Betriebsmittel 4 (einschließlich Boden und Kapital) sowie Werkstoffe 5 und.abrufbaren, verfügbaren Informationen 6 verwendet, wobei die Leistung (Aufgabe, Arbeitsgang, Disposition etc.), die in den Produktionsprozess eingeht, auch über den Artikel 11 erfaßt wird. Selbst die als Faktor eingesetzte, als Dienstleistung erbrachte menschliche Arbeitskraft 3 wird über die Artikel-Identifikation 11 erfaßt und bearbeitet. Somit sind alle im Produktionsprozess oder im Absatz als Güter zu erfassende Produkte (auch Halbfabrikate und Hilfsstoffe etc.) und ebenfalls Leistungen, die Objekte des wirtschaftlichen Handelns und der Kosten- und Leistungsrechnung sind, mit dem Artikel 11 erfasst. Die zu verrechnende Zeit oder die über "Verteilungsschlüssel" zu verteilenden Gemeinkosten etc., sind nach dieser Definition ebenfalls unter der Identifikation der "Artikel-Nr. Logik" im Artikel 11 zu bearbeiten. Bis auf den dispositiven Faktor 7 werden alle Leistungsfaktoren über die Artikel-Identifikation 11 erfasst und somit für die Informatik kenntlich bzw. erfassbar gemacht.
Konditionen 12:
   Die Einflüsse auf die Artikel 11 werden hier als Konditionen 12 bezeichnet. Hierzu zählen die physischen Mengen in verschiedensten Einheiten und die wertmäßigen Einflüsse auf die Artikel 11. Die Einflüsse werden über parametrisierbare "Formeln" (als rechnerisch nachvollziehbare Tatbestände) den Artikeln 11 bei Bedarf als Einflußfaktoren zugeordnet. Als Ergebnis werden die physischen und wertmäßigen Auswirkungen auf die Artikel 11 rechenbar und somit für die Informatik zugänglich. Die durch die Kombination von Artikeln 11 und Adressen 10 besonderen "Adressen-Konditionen" werden ebenfalls über Konditionen 12 erfaßt und bei allen Vorgängen, die diese Kombinationen betreffen, berücksichtigt, so auch die Bewertung des Leistungsverzehrs in den Arbeitsgängen, Aufgaben oder Tätigkeiten. Gleiches gilt für Konditionen 12, die für bestimmte Verfahren bzw. für Verknüpfungen Gültigkeit besitzen (von Adresse 10 → Artikel 11 → Verfahren 13) und den hierbei besonders zu beachtenden "Sonder-Konditionen". Aus den Elementen der Integration 10 bis 11 lassen sich beliebige Tatbestände darstellen, die aus einer Vielzahl von theoretisch denkbaren Verknüpfungen in Bezug auf "besondere Konditionen" Gültigkeit besitzen und somit eindeutig in den Programmen festgelegt werden können.
Verfahren 13:
   Die Beschreibung der Kombinationen der Faktoren wird über das Verfahren 13 realisiert. Jedes wirtschaftliche Handeln erfolgt unter fest definierten oder frei gestaltbaren (innovativen) Verfahrensweisen. Die hoheitlich (staatlich bzw. von öffentlichen Körperschaften) festgelegten Regeln des Warenverkehrs bzw. die allgemeingültigen Handlungsanweisungen (wie Gesetze und Verordnungen) für das aktive oder passive Verhalten im Unternehmen (intern) und am Markt (extern) werden über das Verfahren 13 abgebildet. Unter der Begriffsdefinition "Externe Verfahren" werden alle Regeln (Gesetze, Vorschriften etc.) und Regelungen (frei gestaltbare Vereinbarungen) mit dem Wirtschaftsraum und Marktteilnehmer außerhalb-des Unternehmens subsumiert. Die externen Verfahren gelten auch für die freiwillig von den Marktteilnehmern definierten, vertraglich gebundenen oder in Standards (allgemeingültig z. B. EDIFACT, SEDAS, CCG-Normen etc.) festgelegten Abläufe des Informations- und Warenaustauschs. Das intern erarbeitete Know-how (Patente, Warenzeichen und C.R.-Rechte) sowie die von externen Marktteilnehmern genutzten Rechte und Patente werden ebenfalls über das Verfahren 13 in den Leistungsprozeß des Unternehmens integriert. Die im Unternehmen ablaufenden Kombinationen der Faktoren sowie die von den Führungsebenen durchzuführenden dispositiven Aufgaben werden unter dem Begriff "Interne Verfahren" im Verfahren 13 zusammengefaßt. Zur Steuerung der Kombination der Faktoren im Unternehmen werden Systeme zur Betriebsdatenerfassung (BDE), zum Computer-Integrated-Manufacturing (CIM) sowie zur Produktionsplanung und -steuerung (PPS) eingesetzt. Die dazu notwendigen organisatorischen Beschreibungen sowie die technische Einbindung sämtlicher Produktionsaggregate in die Informationstechnik (über Schnittstellen) werden über das Integrationselement "Interne Verfahren" im Verfahren 13 definiert und physisch realisiert, so auch die Beschreibung der personengebundenen Aufgaben, der Arbeitsstellen und Arbeitsgänge. Die Verwendung und der Einsatz von Betriebsmitteln 4 in der jeweils speziellen Kombination (entsprechend des technischen Fortschritts und der vorhandenen Infrastruktur) in den Einzelwirtschaften und Wirtschaftseinheiten zur jeweiligen Gütererstellung werden über das Verfahren 13 beschrieben bzw. festgelegt. Alle Abläufe und Regeln zwischen den Marktteilnehmern und zwischen den Funktionsbereichen bzw. Funktionen im Unternehmen werden über das Verfahren 13 situationsgerecht, d. h. real erfasst. Je höher der erreichte Abbildungsgrad, desto geringer sind die, durch die Informatik, bedingten Reibungsverluste zwischen den Marktteilnehmern und Unternehmensbereichen im Produktionsprozess. Die Erfassung des Werkstoff-Verzehrs in der Güterherstellung über die Software des Basisintegrationssystems erfolgt ebenfalls wie bei der menschlichen Arbeitskraft 3 und Betriebsmittel 4 über die Adressen 10, Artikel 11, Konditionen 12 und Verfahren 13.

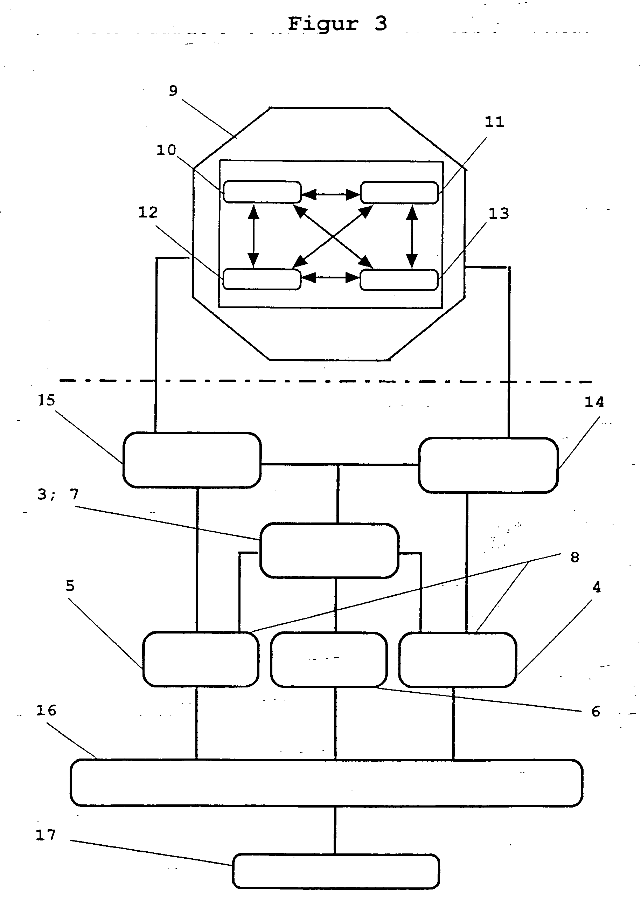

Aus der Kombination des Leistungspotentials 1, dem Elementarfaktor 2 und den Basis-Element 9 in den Unternehmen, Einzelwirtschaften und Wirtschaftseinheiten entstehen die auf den Märkten angebotenen Güter wie in Figur 3 dargestellt. Das Leistungspotential 1 eines Unternehmens ist jeweils zum Zeitpunkt der Betrachtung als gegeben anzusehen. Die Verbesserung der Leistungen ist dennoch die permanente Aufgabe der Betriebsführung. Daraus folgt die Notwendigkeit, den Einsatz der einzelnen Leistungsfaktoren zu optimieren. Der technische Fortschritt und die internationale Arbeitsteilung ermöglichen es der Betriebsführung, im Zeitverlauf die Kombination der Faktoren im Unternehmen wettbewerbssteigernd zu verändern. Die Entwicklung der Faktorpreise auf den Märkten, und somit in den Unternehmen, ist maßgeblich für die Änderungen in den Faktorkombinationsstrukturen verantwortlich. Das Zusammenwirken der Faktoren, als Verknüpfung des- Elementarfaktors 2 als menschliche Arbeitskraft 3, Betriebsmittel 4 (Aggregate, Maschinen, Gelände), Werkstoff 5 (inklusive Rohstoffe, Hilfsstoffe, Betriebsstoffe), abrufbare, verfügbare Information 6, der Steuerung dieses Prozesses über die Betriebsführung der dispositiven Tätigkeit 7 (dispositiver Faktor 7) und der Integration 8 vollzieht sich im Unternehmen nach der vorgegebenen Produktionsfunktion als EDV-technische Abbildung in den Funktionsbereichen der Betriebsführung und Controlling mittels Zeitwirtschaft 14, Warenwirtschaft/Rechnungswesen und Finanzen 15 über das Basis-Element 9 mit den Adressen 10, Artikel 11, Konditionen 12 und Verfahren 13 zu einem von der Informationstechnik geführten Gütererstellungsprozess/Güterbewirtschaftungsprozess 16 (Güterherstellung) in Form der hergestellten Produkte 17.

Die in Figur 3 dargestellten Kombinationen der Faktoren (im Gütererstellungsprozess/Güterbewirtschaftungsprozess 16) machen ersichtlich, daß das unternehmerische Leistungspotential 1 (menschliche Arbeitskraft- 3, Betriebsmittel- 4, Werkstoffkapazitäten 5, abrufbare, verfügbare Information 6) im Zusammenwirken mit der Leistung des Faktors Integration 8 über dieses Basis-Element 9, Adressen 10 und Artikel 11, Konditionen 12 und Verfahren 13 ablauftechnisch und kostenrechnerisch abgebildet wird. Die Leistungen Arbeitsaufwand, Betriebsmitteleinsatz und Werkstoffverbrauch, welche in den Gütererstellungsprozess/Güterbewirtschaftungsprozess 16 einfließen, sind über die Informationstechnik real-time ermittelbar und im Leistungsprozess von Abteilung zu Abteilung abgrenzbar. Die wertmäßige und physische Fortschreibung der einzelnen Arbeitsgänge, der Maschinenleistungen und des Werkstoffverbrauchs im Gütererstellungsprozess ist dem einzelnen Kostenträger in der jeweiligen Abteilung direkt zuzurechnen. Die integrierte Software des Basisintegrationssystems gewährleistet somit, daß die den Produktionsprozeß begleitenden Aufwendungen, dem Kostenträger in real-time und online zugerechnet werden und so die "Ist-Kosten" der einzelnen Güter zu jedem Zeitpunkt transparent aufzeigbar sind. Dieser Abbildungsprozess der Gütererstellung im Informationssystem ist nach branchenspezifischen Kriterien zu gliedern. Die Einteilung der Unternehmen nach Branchengruppen, Branchentypen und Branchenbetrieben erfolgt unter der Maßgabe, eine branchenspezialisierte Software des Basisintegrationssystems für das Anwendungsunternehmen zu konfigurieren.

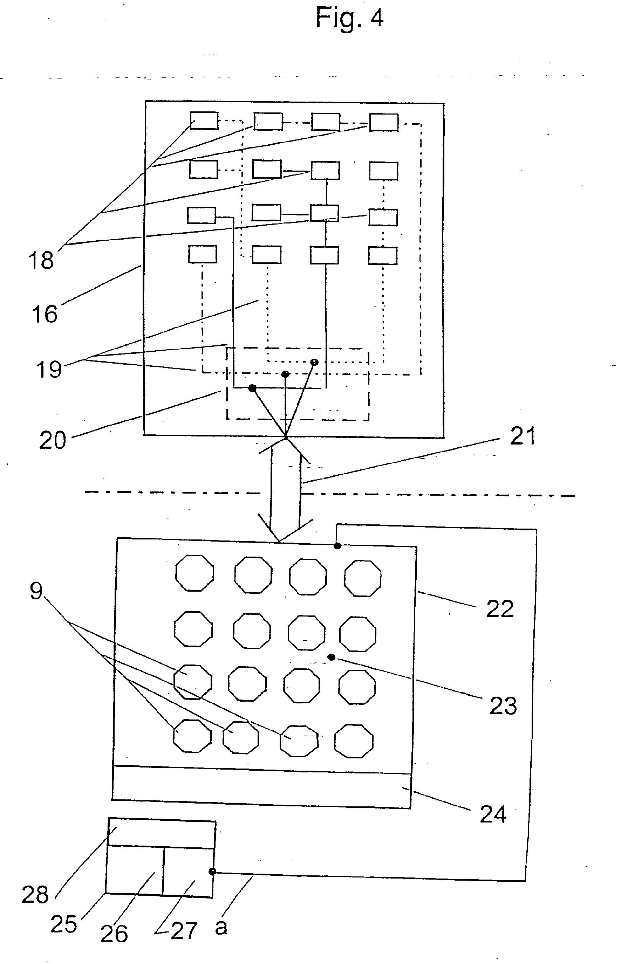

Das Prinzip des EDV-Systems zur Unternehmensführung wird nach Figur 4 mit der Abbildung eines Gütererstellungsprozesses/Güterbewirtschaftungsprozess 16 mit betriebsinternen heterogenen Einzelwirtschaften/Wirtschaftseinheiten 18 bestehend aus z. B. Einheiten der Geschäftsführung, Forschung & Entwicklung, Finanzabteilung, Werbeabteilung, Qualitätssicherungssystem, Warenaus- und -eingang, Lagerhaltung, Personalressourcen und Produktion usw. dargestellt, welche partiell durch heterogene Datenverbindungen 19 mit zugeordneten Kennwerterfassungs- und -steuerungseinheiten zur Steuerung und Kontrolle der Gütererstellung verbunden sind, welche durch ihr logisches Modell als Basis-Element 9 dargestellt werden können, indem das Leistungspotential 1 der Einzelwirtschaften/Wirtschaftseinheiten 18 aus den Elementarfaktoren 2, wie menschliche Arbeitskraft 3, den Betriebsmitteln 4, den Werkstoffen 5, der abrufbaren, verfügbaren Information 6, die über einen dispositiven Faktor 7 mit der Integration 8 wirken, und das Basis-Element 9 mindestens aus zwei Elementen der Adresse 10, des Artikels 11, der Konditionen 12 und der Verfahren 13 gebildet werden kann, wobei die charakteristischen Merkmale dieser Elemente untereinander austauschbar eingesetzt werden können, besteht, indem die einem Gütererstellungsprozess/Güterbewirtschaftungsprozess 16 zugeordneten Datenverbindungen 19 über ein spezifisches Integrationselement 20 einzeln und/oder gemeinsam mit anderen über spezifische Schnittstellen 21 mit_ einem Basisintegrationssystem 22 verbunden sind, wobei das Basisintegrationssystem 22 aus einer Software 23 und einem bekannten Rechnersystem 24 besteht, daß dieses Basisintegrationssystem 22 mit Hilfe der Software 23 die Abbildung dieses Gütererstellungsprozesses/Güterbewirtschaftungsprozesses 16 in real-time erlaubt, daß mit Hilfe dieser Software 23 eine Zuordnung des Basis-Elementes 9 zu den Einzelwirtschaften/Wirtschaftseinheiten 18 gegeben ist, daß das Basis-Element 9 über das spezifische Integrationselement 20 und die spezifischen Datenverbindungen 19 mit den zugeordneten Kennwerterfassungseinheiten und Steuerungseinheiten in real-time in Wirkverbindung stehen, daß die Gesamtheit der Basis-Elemente 9 diesen Gütererstellungsprozess/Güterbewirtschaftungsprozess 16 derart hinreichend abbildet, daß eine Kontrolle und Steuerung dessen durch Anweisungen eines intelligenten Controlsystems 25 gegeben ist. Das intelligente Controlsystem 25 ist durch eine Leitung (a) mit den Basisintegrationssystem 22 verbunden. Informationen in real-time liegen beim intelligenten Controlsystem 25 als Datensätze an, die in Signale und umgekehrt von Signalen in Datensätze umgewandelt werden, das mit Anweisungen für den Gütererstellungsprozess/Güterbewirtschaftsprozess 16 von diesem durch den Rechner 26, durch eine Softwareschicht 27 und durch ein Verbindungselement 28 mit einer Software vorgenommen wird, wobei die Softwareschicht 27 und das Verbindungselement 28 mit der internen Software integrierter Bestandteil des Rechnersystems 24 sein kann und daß das intelligente Controlsystem 25 mittels Rechner 26, der Softwareschicht 27 und dem Verbindungselement 28 mit dem Basisintegrationssystem 22, dem spezifischen Integrationselement 20 über die Datenverbindungen 19 mit der Einzelwirtschaft/Wirtschaftseinheit 18 in der Weise in Wirkverbindung steht, daß das Leistungspotential 1 der Einzelwirtschaft/Wirtschaftseinheit 18 durch Elementarfaktoren 2 ausgewiesen ist und als Datensatz beim intelligenten Controlsystem 25 anliegt und für die gewinnorientierte und prozessorientierte Wirtschaft des Gütererstellungsprozesses/Güterbewirtschaftungs-prozesses 16, der von den Elementarfaktoren 2, menschlichen Arbeitskraft 3, Betriebsmittel 4, Werkstoffe 5 und abrufbaren, verfügbaren Information 6 bestimmt ist und deren Kombinationsfähigkeit von einem dispositiven Faktor 7 und einer Integration 8 beeinflusst ist, eine Auswahl von Anweisungen zur positiven Beeinflussung des Gütererstellungsprozesses/Güterbewirtschaftungsprozesses 16 trifft und diese mittels Datensatz gemäß zuvor genannten Datenfluss und Wirkverbindungen den Gütererstellungsprozess/Güterbewirtschaftungsprozess 16 steuert.

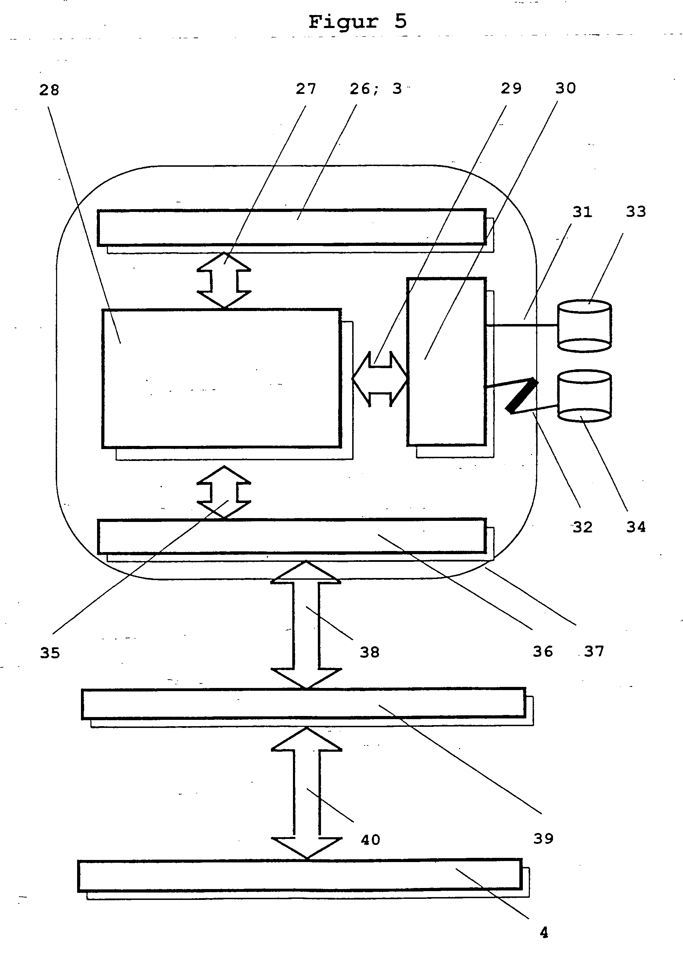

Nach Figur 5 ist technisch das EDV-System zur Unternehmensführung in verschiedenen Ebenen und Modulen realisiert, die miteinander über fest definierte Schnittstellen verbunden sind und somit ausgetauscht werden können, ohne die anderen Module zu beeinflussen.
Eine Präsentation/Interaktion 29 dient als Schnittstelle zur menschlichen Arbeitskraft 3, nimmt von dieser Eingaben entgegen und präsentiert ihr die ermittelten Ergebnisse. Über eine fest definierte Schnittstelle 1 30 kommuniziert sie mit einer Applikation 31. Die Applikation 31 enthält die betriebswirtschaftliche Ablauflogik und führt die von der menschlichen Arbeitskraft 3 angeforderten Aktionen aus. Dazu kommuniziert sie über eine Schnittstelle II 32 mit einem Daten-Management-System 33. Das Daten-Management-System 33 greift über eine Schnittstelle III 34 auf eine interne Datenbank 35 oder über eine Schnittstelle IV 36 auf eine entfernte (externe) Datenbank 37 zu und stellt der Applikation 31 über diese Schnittstelle die für die Verarbeitung benötigten Daten zur Verfügung oder schreibt die von der Applikation 31 ermittelten Daten in die interne Datenbank 35 oder in die externe Datenbank 37.
Die fest definierte Schnittstelle I 30 ermöglicht einen Austausch des Moduls Präsentation/Interaktion 29 ohne die anderen Ebenen und Module zu beeinflussen. So können Textpräsentationen und grafische Präsentationen gegeneinander ausgetauscht werden, ohne die Applikation 31 ändern zumüssen. Ebenso ermöglicht die feste Definition der Schnittstelle II 32 einen Austausch des Daten-Management-Systems ohne Rückwirkungen auf die anderen Ebenen und Module. Die Schnittstelle I 29 zur menschlichen Arbeitskraft 3 und die Art der Datenhaltung können so geändert werden, ohne auch die anderen Komponenten ändern zu müssen.
Zur Integration der zur Produktion der Güter und Dienstleistungen eingesetzten Aggregate spricht die Applikation 31 über eine Schnittstelle V 38 ein High-Level-Application-Interface 39 an. Dieses ist nicht betriebsmittelspezifisch, sondern stellt eine Obermenge der Funktionen bereit, die die Applikation 31 von den zur Produktion von Gütern und Dienstleistungen eingesetzten Aggregate anfordern kann. Das High-Level-Application Interface 39 greift über eine Schnittstelle VI 41 auf einen betriebsmittelspezifische Kommunikation zu Betriebsmitteln 42 zu, die über eine Schnittstelle VII 43 die Betriebsmittel 4 steuert. Die Betriebsmittel 4 können beliebige steuerbare Aggregate wie z. B. Waagen, Scanner, Hochregallager oder Rohrbahnen sein. Ein Control-Message-Manager 40 liegt als eigene Schicht um die Präsentation/Interaktion 29, die Applikation 31, das Daten-Management-System 33, das High-Level-Application Interface 39 und die Schnittstellen 30, 32, 34, 35 und 38. Er fängt Meldungen der unterschiedlichen Module und Schnittstellen ab und leitet sie an das adressierte Modul weiter, das die Meldung entsprechend verarbeitet.

### Verwendete Bezugszeichen

- 1: Leistungspotential
- 2: Elementarfaktor
- 3: menschliche Arbeitskraft
- 4: Betriebsmittel
- 5: Werkstoff
- 6: abrufbare, verfügbare Information
- 7: dispositiven Faktor
- 8: Integration
- 9: Basis-Element
- 10: Adresse
- 11: Artikel
- 12: Kondition
- 13: Verfahren
- 14: Zeitwirtschaft
- 15: Warenwirtschaft/Rechnungswesen und Finanzen
- 16: Gütererstellungsprozess/Güterbewirtschaftungsprozess
- 17: Produkt.
- 18: Einzelwirtschaft/Wirtschaftseinheit
- 19: Datenverbindung
- 20: spezifisches Integrationselement
- 21: spezifische Schnittstelle
- 22: Basisintegrationssystem
- 23: Software
- 24: Rechnersystem
- 25: intelligentes Controlsystem
- 26: Rechner
- 27: Softwareschicht
- 28: Verbindungselement
- 29: Präsentation/Interaktion
- 30: Schnittstelle I zwischen Präsentation/Interaktion und Applikation
- 31: Applikation
- 32: Schnittstelle II zwischen Applikation und Daten-Management-System
- 33: Daten-Management-System
- 34: Schnittstelle III zwischen Daten-Management-System und interner Datenbank
- 35: interne Datenbank
- 36: Schnittstelle IV zwischen Daten-Management-System und externer Datenbank
- 37: externe Datenbank
- 38: Schnittstelle V zwischen Applikation und High-Level-Application-Interface
- 39: High-Level-Application-Interface
- 40: Control-Message-Manager
- 41: Schnittstelle VI zwischen High-Level-Application-Interface und der Kommunikation zu Betriebsmitteln
- 42: Kommunikation zu Betriebsmitteln
- 43: Schnittstelle VII zwischen der Kommunikation Betriebsmitteln und den Betriebsmitteln

- a: Verbindung

## Patentansprüche

1. EDV-System zur Unternehmensführung, bei dem der gesamte wirtschaftliche Prozeß in die EDV integriert ist, bestehend aus
• dem Rechnersystem (24),
• einem intelligenten Controlsystem (25),
• einem Gütererstellungsprozess/Güterbewirtschaftungsprozess (16) und
• einem Basisintegrationssystem (22), das dem Rechnersystem (24) zugeordnet ist und über eine Verbindung (a) mit dem intelligenten Controlsystem (25) und über eine spezielle Schnittstelle (21) mit dem Gütererstellungsprozess/ Güterbewirtschaftungsprozess (16) verbunden ist, wobei das Basisintegrationssystem (22) aus einer-betriebswirtschaftlichen Software Applikation (31) und einer-Software (23), die -die Zuordnung eines Basis-Elementes (9) zu Einzelwirtschaften/Wirtschafts-einheiten (18) absichert, besteht, wobei dem Rechnersystem (24) und dem intelligenten Controlsystem (25) in real-time Informationen über den Gütererstellungsprozess/Güterbe-wirtschaftungsprozess (16) vorliegen, die beim Rechnersystem (24) direkt anliegen und beim intelligenten Controlsystem (25) über die Verbindung (a) in Form von Datensätzen anliegen, die in Signale und umgekehrt von Signalen in Datensätze umgewandelt werden, die mit Anweisungen vom intelligenten Controlsystem (25) für den Gütererstellungsprozess/Güterbewirtschaftungsprozess (16) versehen werden, deren Verknüpfung durch den Rechner (26) mittels einer Softwareschicht (27) und einem Verbindungselement (28) mit einer Software vorgenommen wird, wobei die Softwareschicht (27) und das Verbindungselement (28) mit der internen Software integrierter Bestandteil des Rechnersystems (24) sein kann und wobei das intelligente Controlsystem (25) mittels Rechner (26), der Softwareschicht (27) und dem Verbindungselement (28) mit dem Basisintegrationssystem (22), dem spezifischen Integrationselement (20) über die Datenverbindungen (19) mit der Einzelwirtschaft/Wirtschaftseinheit (18) in der Weise in Wirkverbindung steht, dass das Leistungspotential (1) der Einzelwirtschaft/Wirtschaftseinheit (18) durch Elementarfaktoren (2) ausgewiesen ist und als Datensatz beim intelligenten Controlsystem (25) anliegt und für die gewinn- und prozessorientierte Wirtschaft des Gütererstellungsprozesses/Güterbewirtschaftungsprozesses (16), der von den Elementarfaktoren (2), menschlichen Arbeitskraft (3), Betriebsmittel (4), Werkstoffe (5), abrufbare, verfügbare Information (6) bestimmt ist und deren Kombinationsfähigkeit von einem dispositiven Faktor (7) und einer Integration (8), die über das Basiselement (9) wirksam wird, wobei das Basiselement (9) auf die "kleinsten Bausteine" zurückzuführen ist, die auch gleichzeitig Subsummierungs-Elemente in Form von Adressen (10), Artikel (11), Konditionen (12) und Verfahren (13), die gegenseitig in Wechselwirkung stehen und untereinander austauschbar eingesetzt werden können, sind, beeinflusst ist, eine Auswahl von Anweisungen zur positiven Beeinflussung des Gütererstellungsprozesses/Güterbewirtschaftungsprozesses (16) trifft sowie diese mittels Datensatz gemäß zuvor genannten Datenfluss und Wirkverbindungen den Gütererstellungsprozess/ Güterbewirtschaftungsprozess (16) steuert.

2. EDV-System zur Unternehmensführung nach Anspruch 1, **dadurch gekennzeichnet,**
**dass** die unternehmensweit einbezogene EDV durch Datenverbindungen (19) vernetzt ist.

3. EDV-System zur Unternehmensführung nach Anspruch 1 und Anspruch 2, **dadurch gekennzeichnet,**
**dass** durch eine EDV-gemäße Integration komplexer heterogener Einzelwirtschaften/Wirtschaftseinheiten (18) über spezifische Schnittstellen (21), einer Einbindung der Kommunikation und der Standardsoftware zur Präsentation/Interaktion (29) durch spezifische Schnittstellen in die betriebswirtschaftliche Software Applikation (31) eine online und in real-time Erfassung wirtschaftlicher Kennwerte mittels Betriebsdatenerfassungseinheiten erfolgt, diese über Schnittstellen (34), (36) als Daten geordnet in internen und externen Datenbanken (35), (37) gespeichert und verwaltet sowie durch Verfahren (13) der implementierten Wirtschaftsmodelle gehändelt werden und als Ergebnisse zur Steuerung des Gütererstellungsprozesses/ Güterbewirtschaftungsprozesses (16) dienen.

4. EDV-System zur Unternehmensführung nach Anspruch 1 bis Anspruch 3, **dadurch gekennzeichnet,**
**dass** das Wirtschaftsmodell als einen zusätzlichen Elementarfaktor (2) eine Integration (8) betrachtet.

5. EDV-System zur Unternehmensführung nach Anspruch 1 bis Anspruch 4, **dadurch gekennzeichnet,**
**dass** die betriebswirtschaftlichen heterogenen Einzelwirtschaften/Wirtschaftseinheiten (18) durch ihr logisches Modell der Integration (8) als Basis-Elemente (9) informationstechnisch dargestellt sind.

6. EDV-System zur Unternehmensführung nach Anspruch 1 bis Anspruch 5, **dadurch gekennzeichnet,**
**dass** die Basis-Elemente (9) unternehmensweit einheitlich auf eine minimale Anzahl von Elementen beschränkt sind, wodurch die Basis-Elemente (9) eine redundanzfreie Abbildung der wirtschaftlichen Kennwerte der Integration (8) des Gütererstellungsprozesses/Güterbewirtschaftungsprozesses (16) in den jeweiligen Wirtschaftseinheiten (18) sicherstellen.

7. EDV-System zur Unternehmensführung nach Anspruch 1 bis Anspruch 6, **dadurch gekennzeichnet,**
**dass** die Anzahl der Verfahren (13) der implementierten Wirtschaftsmodelle unternehmensweit einheitlich auf die elementaren Grundprozesse zwischen und innerhalb der Elemente des Basis-Elements (9) reduziert sind, wodurch eine minimale Anzahl redundanzfreier Verfahren (13) sichergestellt ist.

8. EDV-System zur Unternehmensführung nach Anspruch 1 bis Anspruch 7, **dadurch gekennzeichnet,**
**dass** die spezifischen Schnittstellen I, II, III, IV, V, VI, VII (30), (32), (34), (36), (38), (41), (93) der EDV unternehmensweit einheitlich durch eine systemunabhängige modulare Schalenstruktur realisiert sind.

9. EDV-System zur Unternehmensführung nach Anspruch 1 bis Anspruch 8, **dadurch gekennzeichnet,**
**dass** mittels der Adressen (10) alle internen und externen, juristischen und natürlichen Personen und Einheiten, des Artikels (11) sämtliche sachlichen Vermögenswerte, der Konditionen (12) alle Parameter bezüglich der Preisbildung und der Verfahren (13) alle möglichen Verknüpfungen zwischen und innerhalb der Elemente unternehmensweit einheitlich abgebildet werden.

10. EDV-System zur Unternehmensführung nach Anspruch 9,
**dadurch gekennzeichnet,**
**dass** das Element Adressen (10):
Vertreter, Lieferanten, Kunden, Abteilungen, Personal, Geschäftsfilialen, Geschäftszentralen, ... einheitlich beinhaltet.

11. EDV-System zur Unternehmensführung nach Anspruch 9,
**dadurch gekennzeichnet,**
**dass** das Element Artikel (11): Werkstoffe, Betriebsstoffe, Hilfsstoffe, Handelswaren, Verkaufsartikel, Zwischenprodukte, Anlagen, ...
einheitlich beinhaltet.

12. EDV-System zur Unternehmensführung nach Anspruch 9,
**dadurch gekennzeichnet,**
**dass** das Element Konditionen (12): Preise, Abzüge, Zuschläge, kalkulatorische Kosten, Geld-Abzüge, ... einheitlich beinhaltet.

13. EDV-System zur Unternehmensführung nach Anspruch 9,
**dadurch gekennzeichnet,**
**dass** das Element Verfahren (13):
die betriebswirtschaftlichen Wechselwirkungen innerhalb der Adressen (10) (z. B. Kunde A und Vertreter B), innerhalb der Artikel (11) (z. B. Rezepturen), innerhalb der Konditionen (12) (z. B. Priorität bei der Konditionsberechnung), zwischen Adressen (10) und Artikeln (11) (z. B. Kundenauftrag), zwischen Adressen (10) und Konditionen (12) (z. B. Prämie), zwischen Artikeln (11) und Konditionen (12) (z. B. Mengenrabat) einheitlich beinhaltet.

14. EDV-System zur Unternehmensführung nach Anspruch 9,
**dadurch gekennzeichnet,**
**dass** die einzelnen Module der Schalenstruktur der Schnittstellen I, II, III, IV, V, VI, VII (30), (32), (34), (36), (38), (41), (43) zur Verbindung zwischen einer ersten und einer zweiten Schnittstellenschicht jeweils zwei schnittstellenschichtspezifische Komponenten aufweist, die über eine unternehmensweit einheitliche innere Schnittstellenschicht verbunden sind, wodurch bei einer notwendigen Anpassung eines Moduls der Schnittstelle auf eine veränderte Schnittstellenschicht, nur eine Komponente angepasst werden muss.

15. EDV-System zur Unternehmensführung nach Anspruch 9,
**dadurch gekennzeichnet,**
**dass** ein Control-Message-Manager (40) als eigene Schicht um die Präsentation/Interaktion (29), die Applikation (31), das Daten-Management-System (33), das High-Level-Application Interface (39) und die Schnittstellen I, II, III, IV, V, VI, VII (30), (32), (34), (36), (38), (41) und (43) umgibt, welcher Meldungen der unterschiedlichen Module und Schnittstellen abfängt und sie an das adressierte Modul weiterleitet, welches die Meldung entsprechend verarbeitet.

## Claims

1. Electronic data processing system for business management, wherein the whole business process is integrated into the electronic data processing, consisting of
• the computer system (24),
• an intelligent control system (25),
• a goods production process/goods management process (16) and
• a base integration system (22) which is allocated to the computer system (24) and is connected via a connection (a) to the intelligent control system (25) and via a special interface (21) to the goods production process/goods management process (16), wherein the base integration system (22) consists of a business management software application (31) and software (23) which secures the allocation of a base element (9) to individual businesses/business entities (18), wherein information about the goods production process/goods management process (16) is provided in real time to the computer system (24) and to the intelligent control system (25), which information is provided directly in the computer system (24) and is provided in the intelligent control system (25) via the connection (a) in the form of data records which are converted into signals and conversely from signals into data records, which are provided with instructions by the intelligent control system (25) for the goods production process/goods management process (16), the coupling of which is carried out via the computer (26) by means of a software layer (27) and a connection element (28) with software, wherein the software layer (27) and the connection element (28) can be a component of the computer system (24) integrated with the internal software and wherein the intelligent control system (25) is operatively connected by means of the computer (26), the software layer (27) and the connection element (28) to the base integration system (22), to the specific integration element (20) via the data connections (19) to the individual business/business entity (18) in such a way that the performance potential (1) of the individual business/business entity (18) is identified by elementary factors (2) and is provided as a data record in the intelligent control system (25), and for the profit-oriented and process-oriented management of the goods production process/goods management process (16), which is determined by the elementary factors (2), human workforce (3), resources (4), materials (5), retrievable, available information (6), and the combination capability thereof is influenced by a planning factor (7) and an integration (8) which becomes effective via the base element (9), wherein the base element (9) can be attributed to the "smallest components" which are also at the same time subsuming elements in the form of addresses (10), articles (11), conditions (12) and processes (13) which have a mutual interaction and can be used one in exchange for another, performs a selection of instructions for positively influencing the goods production process/goods management process (16) and by means of a data record this selection controls the goods production process/goods management process (16) in accordance with the previously named flow of data and operating connections.

2. Electronic data processing system for business management as claimed in claim 1, **characterised in that** the business-wide incorporated electronic data processing is networked via data connections (19).

3. Electronic data processing system for business management as claimed in claim 1 and claim 2, **characterised in that** by means of an electronic data processing integration of complex heterogeneous individual businesses/business entities (18) via specific interfaces (21), of an incorporation of the communication and of the standard software for presentation/interaction (29) via specific interfaces into the business management software application (31) an online and real time detection of the business characteristic values is effected by means of operational data detection units, these are ordered as data via interfaces (34), (36) stored and managed in internal and external data bases (35), (37) and handled by processes (13) of the implemented business models and serve as results for controlling the goods production process/goods management process (16).

4. Electronic data processing system for business management as claimed in claim 1 to claim 3, **characterised in that** the business model considers an integration (8) as an additional elementary factor (2).

5. Electronic data processing system for business management as claimed in claim 1 to claim 4, **characterised in that** the business management heterogeneous individual businesses/business entities (18) are illustrated in terms of information technology by their logic model of the integration (8) as base elements (9).

6. Electronic data processing system for business management as claimed in claim 1 to claim 5, **characterised in that** the base elements (9) are uniformly limited across the business to a minimum number of elements, whereby the base elements (9) ensure a redundancy-free depiction of the business characteristic values of the integration (8) of the goods production process/goods management process (16) in the respective business entities (18).

7. Electronic data processing system for business management as claimed in claim 1 to claim 6, **characterised in that** the number of processes (13) of the implemented business models are uniformly reduced across the business to the elementary basic processes between and within the elements of the base elements (9), whereby a minimum number of redundancy-free processes (13) is ensured.

8. Electronic data processing system for business management as claimed in claim 1 to claim 7, **characterised in that** the specific interfaces I, II, III, IV, V, VI, VII (30), (32), (34), (36), (38), (41), (43) of the electronic data processing are uniformly produced across the business by a system-independent modular shell structure.

9. Electronic data processing system for business management as claimed in claim 1 to claim 8, **characterised in that** by means of the addresses (10) all internal and external, legal and natural persons and entities are uniformly depicted across the business, by means of the article (11) all relevant assets, by means of the conditions (12) all parameters relating to pricing and by means of the processes (13) all possible couplings between and within the elements.

10. Electronic data processing system for business management as claimed in claim 9, **characterised in that** the addresses element (10) uniformly contains: representatives, suppliers, clients, departments, personnel, subsidiaries, business centres, ...

11. Electronic data processing system for business management as claimed in claim 9, **characterised in that** the article element (11) uniformly contains: materials, operating supplies, auxiliary materials, merchandise, articles for sale, intermediate products, equipment, ...

12. Electronic data processing system for business management as claimed in claim 9, **characterised in that** the conditions element (12) uniformly contains: prices, deductions, additional charges, costings, monetary discounts, ...

13. Electronic data processing system for business management as claimed in claim 9, **characterised in that** the processes element (13) uniformly contains: the business management interactions within the addresses (10) (e.g. client A and representative B), within the articles (11) (e.g. formulations), within the conditions (12) (e.g. priority in the case of condition calculation), between addresses (10) and articles (11) (e.g. customer order), between addresses (10) and conditions (12) (e.g. premium), between articles (11) and conditions (12) (e.g. quantity discount).

14. Electronic data processing system for business management as claimed in claim 9, **characterised in that** the individual modules of the shell structure of the interfaces I, II, III, IV, V, VI, VII (30), (32), (34), (36), (38), (41), (43) comprise for connection between a first and a second interface layer in each case two interface layer-specific components which are connected via an internal interface layer which is uniform across the business, whereby in the case of a necessary adaptation of a module of the interface to a changed interface layer only one component must be adapted.

15. Electronic data processing system for business management as claimed in claim 9, **characterised in that** a control-message-manager (40) as a dedicated layer surrounds the presentation/interaction (29), the application (31), the data management system (33), the high-level application interface (39) and the interfaces I, II, III, IV, V, VI, VII (30), (32), (34), (36), (38), (41) and (43), which intercepts messages of the different modules and interfaces and passes them to the addressed module which processes the message accordingly.

## Revendications

1. Système électronique de traitement des données pour la conduite d'entreprise, dans lequel l'ensemble du processus économique est intégré au système, comprenant :
- le système de calculateurs (24),
- un système intelligent de commande (25),
- un processus (16) de production/ exploitation des produits, et
- un système basique d'intégration (22), associé au système de calculateurs (24) et relié par une liaison (a) au système intelligent de contrôle (25) et par une interface (21) spéciale au processus (16) de production/exploitation des produits,
dans lequel
- le système basique d'intégration (22) est composé d'un programme (31) d'application d'économie d'exploitation (31) et d'un programme (23) qui garantit l'affectation d'un élément de base (9) à des unités économiques particulières ou générales (18),
- le système de calculateurs (24) et le système intelligent de contrôle (25) reçoivent en temps réel des informations concernant le processus de production/ exploitation des produits (16) directement pour le système de calculateurs, mais en ce qui concerne le système intelligent de commande (25), par la liaison (a) sous la forme d'ensembles de données transformées en signaux et inversement de signaux transformés en ensembles de données, qui sont dotés d'indications fournies par le système intelligent de commande (25) pour le processus de production / exploitation de produits (16) et dont la combinaison est assurée par le calculateur (26) au moyen d'une couche de programme (27) et d'un élément de liaison (28) à un programme,
- la couche de programme (27) et l'élément de liaison (28) au programme interne peut être un composant intégré du système de calculateurs (24),
- le système intelligent de commande (25), par l'intermédiaire du calculateur (26), de la couche de programme (27) et de l'élément (28) de liaison au système d'intégration de base (22) et à l'élément d'intégration spécifique (20), est en interaction par les liaisons de données (19) avec l'unité économique particulière ou générale (18) de manière telle que le potentiel de puissance (1) de cette unité (18) est exprimé par des facteurs élémentaires (2) et apparaît sous la forme d'ensemble de données dans le système intelligent de commande (25), et
- pour assurer l'économie orientée vers le processus et le gain du processus de production/exploitation des produits, défini par des facteurs élémentaires (2), la force de travail (3) des hommes, les moyens d'exploitation (4), les matières (5), l'information (6) disponible qui peut être appelée, et dont la capacité de combinaison est influencée par un facteur dispositif (7) et une intégration (8) effectuée par l'élément de base (9), cet élément de base (9) devant être ramené aux « plus petits composants » qui sont en même temps des éléments de sous-accumulation sous la forme d'adresses (10), d'articles (11), de conditions (12) et de procédures (13) interaction et interchangeables, une sélection des indications vise à influencer positivement le processus de production/exploitation des produits (16) et commande également ce processus (16) au moyen de l'ensemble de données selon le flux de données et les interactions indiquées précédemment.

2. Système selon la revendication 1,
**caractérisé en ce que**
le système électronique de traitement de données correspondant à l'ensemble de l'entreprise est interconnecté par des lignes de transmission de données (19).

3. Système selon l'une quelconque des revendications 1 et 2,
**caractérisé en ce que**
par une intégration par traitement électronique de données, d'unités économiques complexes hétérogènes individuelles/générales (18) assurée par l'intermédiaire d'interfaces (21) spécifiques, d'une intégration de la communication et du programme standard dans une présentation/interaction (29) par des interfaces spécifiques dans l'application du programme d'application d'économie d'exploitation, on obtient une saisie directe et en temps réel de caractéristiques économiques au moyen d'unités de saisie de données de fonctionnement, et ces caractéristiques à travers des interfaces (34), (36) sont mémorisées et gérées sous forme de données classées dans des banques de données interne et externe (35), (37) ainsi que traitées par la procédure (13) des modèles économiques implémentés et servent à commander le processus de production/exploitation des produits (16).

4. Système selon l'une quelconques des revendications 1 à 3,
**caractérisé en ce que**
le modèle économique prend en compte une intégration (8) en tant que facteur élémentaire (2) supplémentaire.

5. Système selon l'une quelconques des revendications 1 à 4,
**caractérisé en ce que**
les unités hétérogènes d'économie d'exploitation individuelles ou générales (18) sont représentées en tant qu'éléments de base (9) sur le plan de la technique d'information, par leur modèle d'intégration (8).

6. Système selon l'une quelconques des revendications 1 à 5,
**caractérisé en ce que**
les éléments de base (9), pour une entreprise dans son exemple, sont limités à un nombre minimal d'éléments, par lesquels les éléments de base (9) garantissent une représentation sans redondance des caractéristiques économiques d'intégration (8) du processus de production/exploitation (16) des produits dans les diverses unités économiques (18).

7. Système selon l'une quelconques des revendications 1 à 6,
**caractérisé en ce que**
le nombre des procédures (13) des modèles économiques implémentés sont, dans l'entreprise prise dans son ensemble, réduits aux procédures élémentaires de base entre et dans les éléments de l'élément de base (9), ce qui garantit un nombre minimal de procédures (13) sans redondance.

8. Système selon l'une quelconques des revendications 1 à 7,
**caractérisé en ce que**
les interfaces spécifiques I, II, III, IV, V, VI, VII (30), (32), (34), (36), (38), (41), (43) du système de traitement électronique de l'entreprise prise dans son ensemble, sont réalisées par une structure modulaire à couches, indépendante du système.

9. Système selon l'une quelconques des revendications 1 à 8,
**caractérisé en ce qu'**
on réalise toutes les connexions possibles entre et dans les éléments au niveau de l'entreprise prise dans son ensemble au moyen des adresses (10) de toutes les personnes internes et externes, physiques et morales, de l'article (11) de l'ensemble de valeurs réelles, des conditions (12) de tous les paramètres concernant la formation des prix et les procédures (13).

10. Système selon la revendication 9,
**caractérisé en ce que**
l'élément adresse (10) contient unitairement :
les représentants, les fournisseurs, les clients, les services, le personnel, les filiales, les centrales commerciales.....

11. Système selon la revendication 9,
**caractérisé en ce que**
l'élément article (11) contient unitairement :
les matières, les achats, les produits de fonctionnement, les produits auxiliaires, les articles à la vente, les achats les produits intermédiaires, le immobilisations.

12. Système selon la revendication 9,
**caractérisé en ce que**
l'élément conditions (12) contient unitairement :
les prix, les remises, les suppléments, les coûts calculés, les escomptes...

13. Système selon la revendication 9,
**caractérisé en ce que**
l'élément procédé (13) contient unitairement :
les interactions économiques de fonctionnement à l'intérieur des adresses (10) (par exemple client A et représentant B), à l'intérieur des articles (11) (par exemple des reçus), à l'intérieur des conditions (12) (par exemple priorité dans le calcul de la condition), entre des adresses (10) et des articles (11) (par exemple facture client), entre des adresses (10) et des conditions (12) (par exemple prime), entre des articles (11) et des conditions (12) (par exemple rabais pour quantité).

14. Système selon la revendication 9,
**caractérisé en ce que**
les différents modules de la structure en couches des interfaces I, II, III, IV, V, VI, VII (30), (32), (34), (36), (38), (41), (43), présentent chacun, pour relier une première et une seconde couche d'interface, deux composants spécifiques à la couche, reliés par une couche d'interface interne correspondant à l'ensemble de l'entreprise, de sorte qu'il n'y a qu'un composant à ajuster quand il est nécessaire d'ajuster un module de l'interface sur une couche de cette interface.

15. Système selon la revendication 9,
**caractérisé en ce qu'**
un gestionnaire des messages de commande (40) en tant que couche individuelle comprend la présentation/interaction (29), l'application (31), le système de gestion des données (33), l'interface d'application évoluée (39), et les interfaces I, II, III, IV, V, VI, VII (30), (32), (34), (36), (38), (41), (43), il recueille des informations provenant des différents modules et interfaces et les transmet au module adressé, qui traite l'information de manière correspondante.
